# FASCICULE DE BREVET EUROPEEN

(11) **EP 3 808 589 B1**
(45) Date de publication et mention de la délivrance du brevet: **07.12.2022**
(21) Numéro de dépôt: 20202081.4
(22) Date de dépôt: 15.10.2020
(51) Int. Cl.: B60L 1/00, B25F 5/00, E01B 31/00, E01B 29/24, E01B 31/17

(54) **SYSTÈME DE MOTORISATION ÉLECTRIQUE POUR MACHINE DE CONSTRUCTION OU MAINTENANCE TECHNIQUE, NOTAMMENT FERROVIAIRE**
ELEKTRISCHES MOTORISIERUNGSSYSTEM FÜR BAUMASCHINE ODER TECHNISCHE WARTUNGSMASCHINE, INSBESONDERE FÜR SCHIENENVERKEHR
ELECTRIC DRIVE SYSTEM FOR A CONSTRUCTION OR TECHNICAL MAINTENANCE MACHINE, IN PARTICULAR A RAILWAY VEHICLE

(30) Priorité: 15.10.2019 FR 1911482
(43) Date de publication de la demande: 21.04.2021
(73) Titulaire: GEISMAR ALPES, 38110 Saint Didier de la Tour (FR)
(72) Inventeur: ARAVINDAKSHAN, Gérald, 38300 Serezin de la Tour (FR); GASPARD, Olivier, 38490 Saint Ondras (FR); TAVERGNIER, Quentin, 69003 Lyon (FR); MORALES, Sylvain, 38730 Le Pin (FR)
(74) Mandataire: Lefevre-Groboillot, David André

(56) Documents cités:
- EP-A1- 0 154 777
- WO-A1-2019/100090
- US-A- 5 577 954

## Description

L'invention porte sur un système de motorisation électrique à arbre de force pour machine de construction ou maintenance technique en extérieur, notamment ferroviaire.

La construction ou maintenance technique, notamment ferroviaire, en extérieur ou en environnement non contrôlé comme l'espace des tunnels ferroviaires, nécessite l'utilisation de machines puissantes capables de procéder à différentes opérations, comme le perçage, le sciage, l'usinage par abrasion (meulage), le vissage, le déplacement d'objets lourds, ou encore l'application de chocs. Ces machines doivent être déplaçables. On s'intéresse à des machines de construction ou maintenance puissantes, mais pouvant être opérées par un ouvrier se déplaçant à pied. Une telle machine de construction ou de maintenance est connue du document EP 0 154 777 A1.

Dans ce contexte, il est connu d'utiliser des moteurs à carburant fossile liquide, tel l'essence ou le gazole, et fournissant un couple sur un arbre de sortie qui est couplé à la machine de construction ou maintenance. Le carburant liquide issu du pétrole offre une forte densité énergétique qui permet d'embarquer l'énergie dans le volume associé au moteur, qui comprend un réservoir de petite ou moyenne taille.

On ne dispose par contre pas de solution simple à base d'énergie électrique, alors qu'une telle solution aurait de multiples avantages : outre la réduction des émissions locales de gaz à effet de serre, elle limiterait les émissions de particules et d'oxydes d'azote dans l'environnement direct, parfois confiné, dans le cadre duquel évoluent les opérateurs effectuant la construction ou maintenance. Elle limiterait aussi l'amplitude sonore imposée aux opérateurs, les moteurs électriques étant en règle générale moins bruyants que les moteurs thermiques. Une diminution des vibrations peut aussi être espérée par la substitution d'une motorisation électrique à la motorisation thermique.

La mise en place d'une solution simple à base de puissance électrique est contrariée par l'arrangement spatial des interfaces des machines de construction ou maintenance existantes, définies pour des motorisations à carburant fossile liquide, et l'espace différent occupé par la source d'énergie dans un système électrique, ainsi que par la complexité de protéger un système électrique des intempéries auxquelles les opérateurs de construction ou maintenance technique font face dans leur travail quotidien. Il convient aussi d'ajouter que les gammes de couple et de régime de sortie ne sont souvent pas les mêmes pour une motorisation thermique et une motorisation électrique, et qu'il est donc nécessaire d'accommoder, dans un contexte défini initialement pour un moteur thermique, des moyens pour prendre en compte ces différences de profil de puissance de sortie.

Pour résoudre ces problèmes, il est proposé un système de motorisation pour machine de construction ou maintenance technique, comprenant dans un bloc compact une paroi admettant sensiblement un plan de symétrie transversal et séparant un premier compartiment dans lequel est logé un moteur du système de motorisation et un deuxième compartiment abritant des éléments électroniques de contrôle du moteur, embarqués dans le système de motorisation, le système de motorisation comprenant de plus un arbre de sortie du système parallèle à la paroi et parallèle audit plan de symétrie.

De manière singulière, le moteur est électrique et le système comprend de plus un connecteur pour alimentation électrique de puissance, par une source électrique externe, dudit moteur électrique et desdits éléments électroniques de contrôle, le connecteur étant abrité par la paroi, du même côté de ladite paroi que le premier compartiment, ledit premier compartiment étant décentré par rapport audit plan de symétrie, un système de réduction par renvoi dans un plan perpendiculaire à l'arbre de sortie du système couplant ledit arbre de sortie du système avec un arbre de sortie primaire du moteur parallèle à l'arbre de sortie et plus excentré que l'arbre de sortie du système par rapport au plan de symétrie.

Ce système de construction permet d'habilement intégrer la transmission et le moteur électrique dans un volume compact.

De manière optionnelle et avantageuse, le système répond de plus aux caractéristiques suivantes :
- le système de réduction par renvoi dans un plan est un système de réduction par courroie, mais alternativement il pourrait utiliser une chaine;
- le bloc compact peut comprendre des pieds définissant une surface de pose plane parallèle à la paroi, et un flasque de fixation perpendiculaire à la paroi pour interfacer ledit système de motorisation avec une machine de construction ou maintenance technique ;
- le bloc peut comprendre un coffre en plastique thermoformé pour le premier compartiment, la paroi s'étendant au-dessus dudit coffre qu'elle ferme et au-dessus d'un espace externe abrité par la paroi, le système de motorisation comprenant au sein dudit espace un agencement de soutien pour fixer et protéger un câble d'alimentation électrique externe à accoupler audit connecteur ;
- le système peut comprendre un filtre à particules dans une circulation d'air en provenance de l'extérieur du système de motorisation pour refroidir le moteur, ledit filtre à particules étant protégé des intempéries par un déflecteur ;
- le système peut comprendre un ventilateur électrique agencé dans une circulation d'air en provenance de l'extérieur du système de motorisation pour refroidir le moteur ;
- le moteur électrique peut être un moteur sans balai ;
- le système de réduction peut comprendre une courroie de réduction couplant deux poulies, ladite courroie et les deux poulies étant carénées par un châssis proposant une accessibilité pour le réglage en tension de ladite courroie.
- le système peut comprendre un système d'équilibrage de pression pour éviter la formation de condensation à l'intérieur du deuxième compartiment.
- le système peut comprendre un connecteur pour relier les éléments électroniques de contrôle du moteur à un contrôleur de la machine de construction ou maintenance technique, les éléments électroniques de contrôle étant configurés pour prendre en compte automatiquement un type de la machine de construction ou maintenance électrique parmi une famille de types de machine de construction ou maintenance électrique, en sorte d'adapter le fonctionnement du moteur.

L'invention consiste aussi en un procédé de contrôle d'une machine de construction ou maintenance technique, comprenant un couplage mécanique de la machine de construction ou maintenance technique avec un arbre de sortie d'un système de motorisation électrique, une reconnaissance par un code électrique d'un type de la machine parmi une famille de machines de construction ou maintenance technique, et un pilotage de l'arbre de sortie du système de motorisation électrique en fonction du type reconnu.

Ce procédé permet notamment de piloter le moteur électrique sur la base d'un scénario de gestion intelligente de l'énergie pour minimiser la consommation d'énergie en fonction du type de machine de maintenance ou de construction et de ses cycles propres.

Les figures 1 et 2 sont des vues de trois quarts sous deux angles différents d'un système de motorisation électrique selon un mode de réalisation de l'invention.

La figure 3 est une vue en coupe du moteur électrique et des équipements associés dans le système de motorisation des figures 1 et 2.

La figure 4 est une vue de l'intérieur du système de motorisation des figures 1 à 3.

La figure 5 est un vue d'un élément particulier du système.

Les figures 6 et 10 montrent l'alimentation en puissance électrique du système.

La figure 7 montre le codage des différents types de machines de construction ou maintenance utilisables.

Les figures 8 et 9 montrent les éléments de contrôle électronique du système.

Les figures 11 à 13 montrent trois cas d'utilisation du système de motorisation, avec deux machines de maintenance ou de constructions différentes, la première, présentée en figures 11 et 12 l'étant sous deux variantes de mises en œuvre.

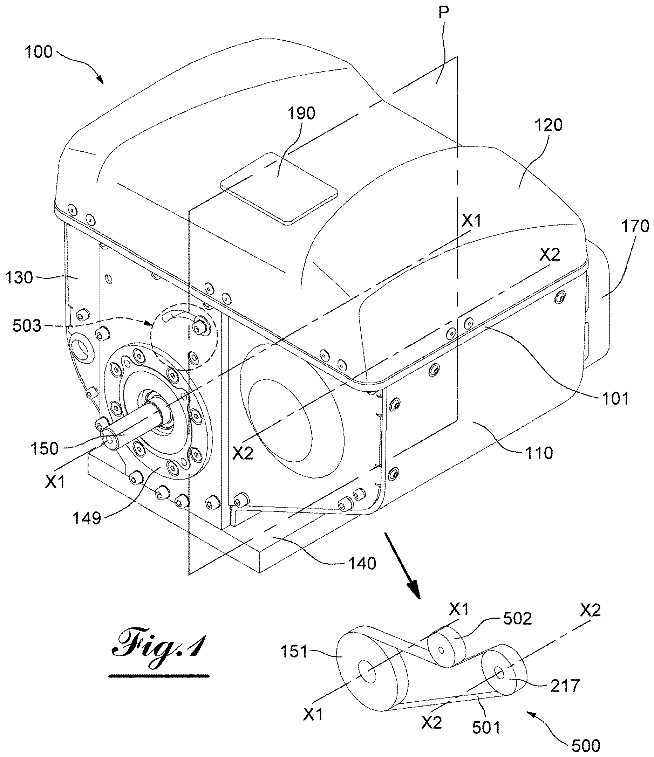

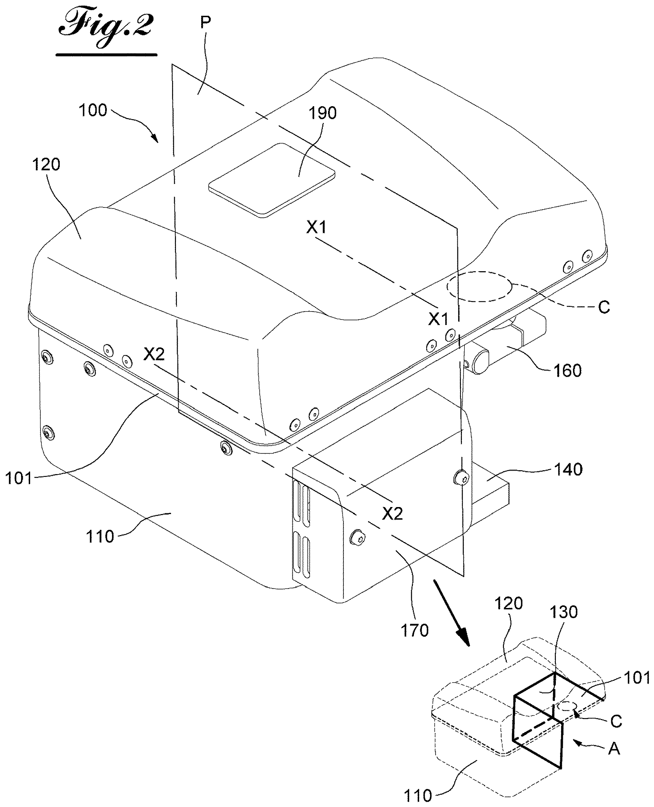

[fig.1] On présente en figures 1 et 2 un bloc moteur électrique 100 que l'on peut alimenter par une batterie externe (représentée plus loin), reliée par un moyen filaire, et qui peut remplacer des moteurs à essence pour la mise en œuvre de plusieurs types de machines de construction ou maintenance ferroviaire.

Le bloc moteur électrique 100, compact, est construit autour d'une paroi 101 séparant un premier compartiment 110 hébergeant un moteur électrique, et un deuxième compartiment 120 accueillant des éléments électroniques de contrôle du moteur. Le premier compartiment est souvent en position inférieure et le deuxième compartiment souvent en position supérieure, mais le système a l'avantage de pouvoir être incliné, y compris fortement, et ainsi l'orientation du bloc par rapport à la verticale n'est pas figée dans le temps.

La paroi 101 admet un plan médian qui est un plan de symétrie. Elle est dans le mode de réalisation rectangulaire, et pourrait notamment être trapézoïdale.

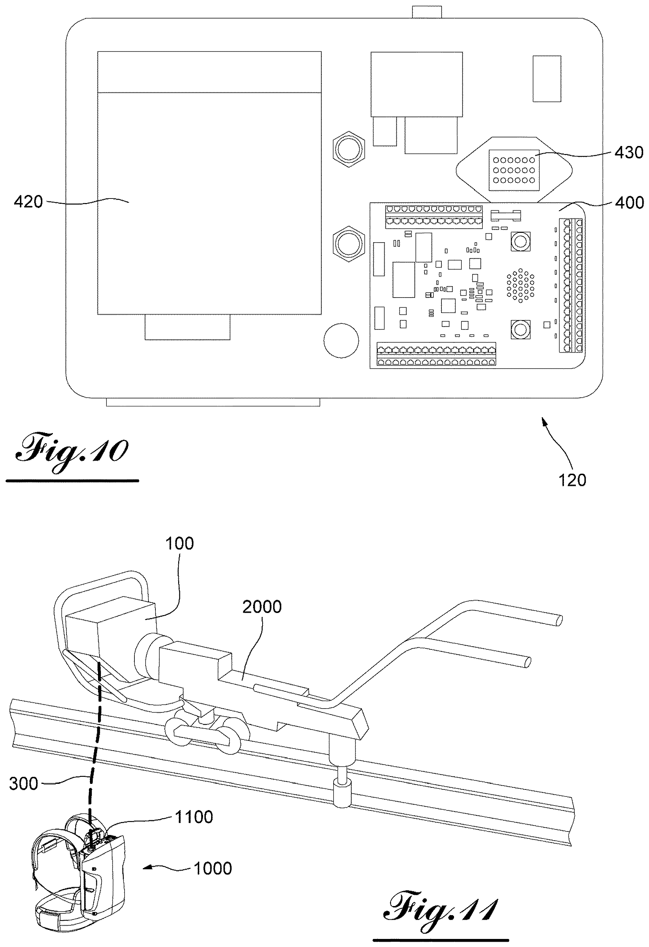

Un carénage 130 dorsal éventuellement en plusieurs segments définit une surface sensiblement planaire intégrant un flasque 149 pour couplage mécanique à une machine de construction ou maintenance (non représentée en figure 1), voir les figures 11 à 13. Le carénage 130 est perpendiculaire à la paroi 101 le long d'un grand côté de celle-ci, sur la face opposée au deuxième compartiment 120.

Le bloc moteur électrique 100 est aussi muni de pieds 140, démontables en fonction du besoin, et compatibles avec l'orientation selon laquelle le premier compartiment est en position supérieure, le deuxième en position inférieure, et le carénage 130 vertical. Alternativement, le bloc moteur 100 peut être tenu par une bride le reliant notamment à la machine de maintenance ou de construction à laquelle il est couplé pour la transmission de puissance mécanique.

Le bloc moteur électrique 100 est équipé naturellement d'un arbre moteur 150 dépassant perpendiculairement du flasque 149 et adapté aux interfaces existantes prévues pour une entrée de puissance provenant d'un moteur à essence ou gazole.

Le bloc moteur électrique 100 comprend une interface homme machine 190 qui se situe sur le capot du deuxième compartiment 120, et qui peut être essentiellement constituée par un affichage.

Elle permet d'indiquer l'autonomie de travail restante, en temps (heures et minutes), en fonction de la machine ferroviaire de maintenance ou de construction sur laquelle le bloc moteur électrique 100 est monté, et de l'énergie restante dans la batterie reliée.

Plus en détails, et sans que cela ne soit entièrement visible tant que le capot du premier compartiment 110 est présent, le bloc moteur est construit notamment autour de deux axes X1 et X2 parallèles l'un à l'autre. X1 est l'axe de l'arbre moteur 150 de sortie du système de motorisation. Il est parallèle à la paroi 101, et est placé plus proche du plan médian de celle-ci que l'axe X2 ne l'est. L'axe X2 est ainsi plus décentré que l'axe X1 dans le volume du bloc moteur électrique 100.

Le carénage 130 abrite, dans l'épaisseur d'une double paroi, un système de réduction 500 reliant l'arbre de sortie 150 qui porte une poulie 151, à un arbre primaire de moteur électrique placé sur l'axe X2, et portant une poulie 217. Les poulies 151 et 217 sont reliées par une courroie 501 tendue à l'aide d'un galet tendeur 502 à réglage automatique par ressort, accessible depuis l'extérieur du bloc moteur 100 par des commandes de blocage 503 présentes le long de la face accessible du carénage 130.

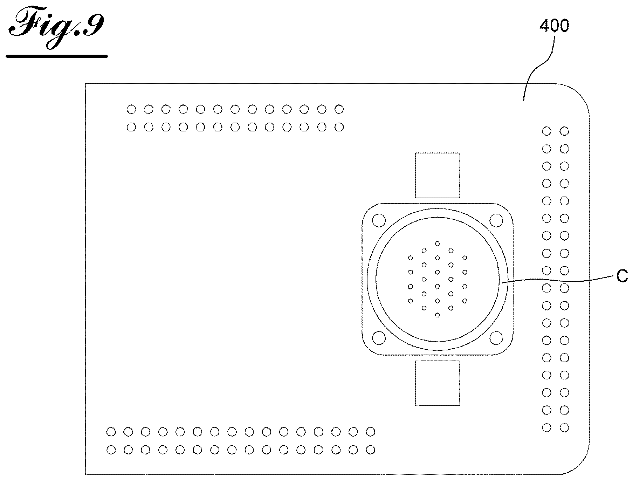

[fig.2] Le bloc moteur est équipé d'un connecteur C d'alimentation de puissance du bloc moteur électrique 100, porté par une carte machine (présentée plus loin en figures 9 et 10) qui est logée dans le deuxième compartiment 120.

Ce connecteur C sert pour le raccordement du bloc moteur 101 au câble d'alimentation électrique le reliant à une batterie de puissance externe.

Le connecteur C a été implanté en sorte de faciliter son accessibilité en situation d'utilisation tout en le protégeant de l'environnement. Il est abrité par la paroi 101 et le carénage 130 qui est perpendiculaire à cette dernière, et est placé à droite du premier compartiment 110 sur la vue de la figure 2. Une surface extérieure du capot du premier compartiment 110, perpendiculaire à la fois à la paroi 101 et au carénage 130, participe aussi à l'abriter, définissant avec le carénage 130 et la paroi 101 un volume accessible de l'extérieur du bloc moteur sans obstacle tel une paroi à contourner mais compris dans le volume compact (ou enveloppe convexe) de celui-ci.

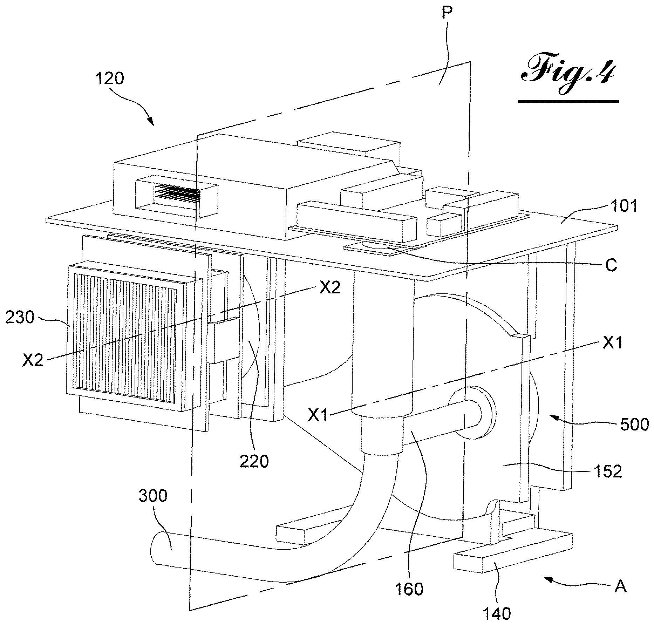

La connexion électrique est ainsi établie entre l'extérieur du bloc moteur et l'intérieur du deuxième compartiment 120, à travers la paroi 101 traversée par le connecteur C (voir aussi la vue de la figure 4 et celle de la figure 9).

Le positionnement de ce connecteur C, affleurant sur la paroi 101 et abrité dans le volume compact (dans l'enveloppe convexe) du bloc moteur, lui permet de ne pas se remplir d'eau de pluie. De même, son intégration à l'intérieur de l'encombrement compact du bloc moteur électrique 100, abrité, permet au câble de décharge d'être peu vulnérable aux chocs. Une bride et un pied support constituent de plus un système de maintien 160 qui est pré-disposé à distance du connecteur C, toujours dans le volume compact (dans l'enveloppe convexe) du bloc moteur, pour maintenir le câble protégé des chocs et des tensions et diminuer les sollicitations imposées au connecteur C.

Les capots des premier et deuxième compartiments 110 et 120 sont démontables et s'intègrent aux éléments fonctionnels. Ils sont réalisés en plastique thermoformé. Ils protègent les différents éléments du bloc moteur et sécurisent les parties pouvant présenter un risque vis-à-vis de l'opérateur et des personnes tierces approchant la zone d'opération. Le capot du deuxième compartiment 120 est symétrique autour du plan P, alors que le capot du premier compartiment 110 circonscrit celui-ci à un volume décentré d'un côté du plan P laissant de la place de l'autre côté du plan P pour le connecteur C et le câble d'alimentation en puissance électrique.

Un déflecteur 170, visible en figures 1 et 2, dépasse du volume du bloc moteur électrique 100 pour définir une entrée d'air pour l'aération du moteur protégée contre les entrées d'eau de pluie. Il constitue lui aussi un capot démontable.

Des flasques encadrent la sortie de puissance mécanique du bloc moteur. Un flasque extérieur 149 est affleurant le long du carénage 130, et avec l'arbre de sortie 150, visible comme lui en figure 1, il reprend des caractéristiques d'un moteur à carburant fossile liquide afin de garantir l'interchangeabilité des motorisations.

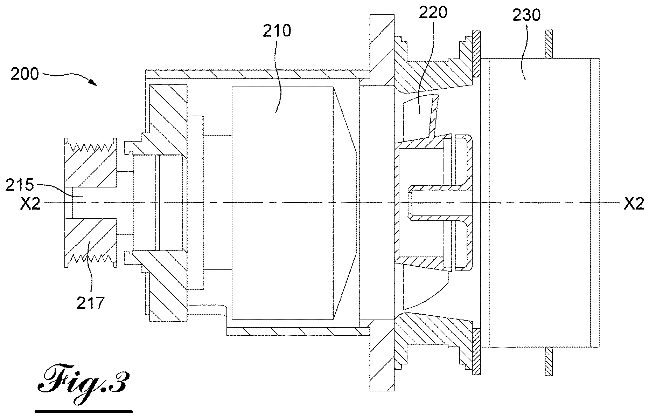

[fig.3] On a représenté en figure 3 en coupe l'intérieur du premier compartiment 110. Le bloc moteur électrique interne 200 comprend un moteur électrique 210 rotatif de type sans balai (brushless), entrainant, par un arbre de sortie 215 une poulie motrice 217. Le maintien centré du moteur électrique 210 est réalisé à l'aide d'un axe de transmission guidé par deux roulements à billes.

Le refroidissement du moteur électrique 210 est assuré par un ventilateur électrique 220 à pales placé à l'opposé de l'arbre de sortie 215 par rapport au moteur électrique 210, coaxialement à celui-ci.

L'apport d'air pour le ventilateur électrique 220 se fait à travers un filtre à air 230 inclus dans le bloc moteur afin de protéger le moteur 210 contre les éventuelles particules présentes dans la zone de travail.

[fig.4] En figure 4, on a visualisé la mise en place du câble de puissance électrique 300, dans le système de maintien 160, et connecté sur la surface externe de la paroi 101 par le connecteur C.

Le câble 300, parce qu'il est soumis à de nombreuses sollicitations lors de l'utilisation, est fixé à un pied par une bride de soutien pouvant prendre diverses formes (un manchon en figure 4, ou un cadre en figure 2) et constituant le système de maintien, afin de limiter les sollicitations mécaniques sur le connecteur de la carte machine.

Le pied support est un ensemble de deux cylindres ayant chacun une extrémité ancrée respectivement dans la structure du premier compartiment 110 et dans la structure arrière du carénage 130 à côté et en dehors, du premier compartiment 110, abrité par la paroi 101. La bride est un cadre ou un anneau tenu par les deux autres extrémités des cylindres formant le pied et troué, par lequel le câble de raccordement électrique peut être introduit pour approcher le connecteur électrique sous la paroi 101. La bride est maintenue en place par le pied support et stabilise le câble électrique à distance du connecteur électrique sous la paroi 101, ce qui évite les sollicitations mécaniques indésirables au niveau du connecteur électrique, qui est ainsi protégé.

On a aussi représenté le compartiment électronique qui est implanté sur le dessus du châssis. Son boitier est constitué de la tôle support en aluminium formant la paroi 101 et d'un couvercle en plastique thermoformé, visible en figures 1 et 2, et absent en figure 4.

Le deuxième compartiment 120 pour l'électronique contient un contrôleur moteur, une carte électronique machine et un contacteur. La fonction du deuxième compartiment est de contenir l'ensemble des composants électriques, raccordables en eux, dans un environnement facilement accessible et étanche à l'eau. Un dispositif d'équilibrage de pression permet d'éviter la formation de condensation à l'intérieur du boitier.

Par ailleurs, le moteur électrique 210 pouvant tourner à un régime supérieur à celui d'un moteur thermique un système de réduction 500, déjà mentionné en relation avec la figure 1 est inclus. Le régime de rotation du moteur électrique 210 est abaissé à une valeur similaire à celle d'un moteur thermique après cette réduction, ce qui a pour avantage d'augmenter le couple fourni au-dessus de ce qui est souvent proposé par un moteur thermique de même encombrement.

La réduction entre les deux poulies 151 et 217 utilise la courroie de transmission de puissance 501 qui est une courroie striée dans le sens longitudinal.

Le système de réglage de la tension est assuré par le galet tendeur 502, qui est monté sur ressort de tension coopérant avec une vis de tension dans un fourreau (non représenté). Il est équipé d'un dispositif de verrouillage de la tension.

Pour mener le réglage, la courroie 501 est tout d'abord détendue, la vis de tension est desserrée et le ressort de tension est rentré dans le fourreau, par l'intermédiaire des éléments de commande 503 visualisés en figure 1. Le galet tendeur 502 est alors en position haute. Si la courroie est bien positionnée, et quand cela est le cas, on serre la vis de tension progressivement jusqu'en butée. Le ressort de tension est alors comprimé et plaque le galet tendeur sur la courroie. La tension est exercée par le ressort, ce qui permet une bonne reproductibilité. Puis on verrouille la position du galet tendeur afin d'éviter tout dérèglement lié aux vibrations de la courroie.

En cas d'usure de la courroie, on déverrouille et on verrouille à nouveau le support galet afin que le ressort de tension exerce la bonne pression sur le galet tendeur.

Un châssis en aluminium mécano-assemblé, léger, soutient l'ensemble des éléments et constitue notamment le carénage 130 mentionné en relation avec la figure 1. Il permet le remplacement de la courroie sans désolidariser le bloc moteur de la machine avec laquelle il est couplé et qui peut l'entourer en réduisant l'accessibilité. Pour cela le deuxième flasque de la sortie de puissance du bloc moteur, le flasque arrière 152, est accessible dans l'espace libre défini par le carénage 130, la paroi 101 et le capot du premier compartiment 110 selon la voie d'accès A montrée en figures 2 et 4. Ce flasque 152, visible en figure 4, est démontable pour retirer et remplacer la courroie.

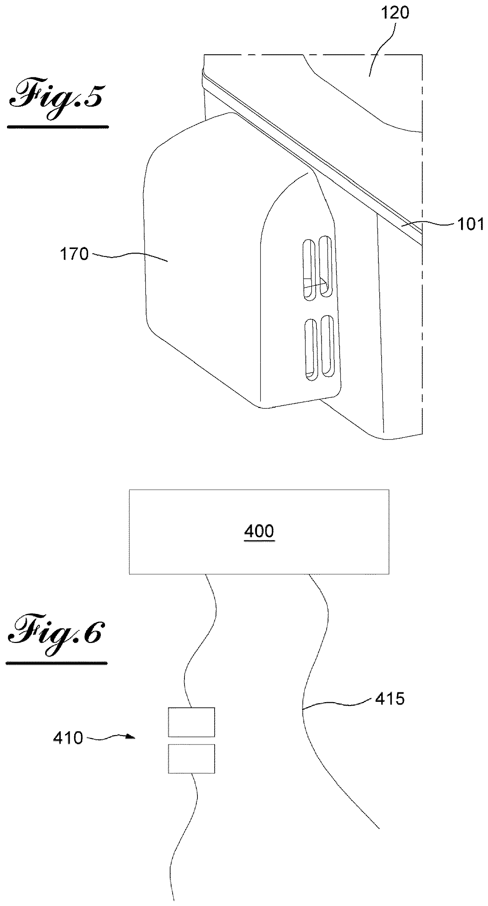

[fig.5] Comme représenté en figure 5, un déflecteur d'air 170 est présent pour empêcher que l'eau de pluie n'atteigne le filtre à air. Il comprend un système de chicanes empêchant l'eau de pénétrer jusqu'au filtre quelle que soit l'orientation du bloc moteur.

[fig.6] Comme représenté en figure 6, il est aussi prévu de raccorder, à l'aide d'un connecteur électrique 18 points, une carte électronique machine 400 au ventilateur du moteur (ventilateur 220 en figure 3) qui doit être alimenté en électricité pour tourner et refroidir le moteur électrique. La carte électronique 400 est placée dans le deuxième compartiment 120, visibles aux figures 1, 2 et 4. La connexion au ventilateur est effectuée avec un connecteur à trois points 410, étanche, qui traverse la paroi 101 (visible en figures 1 à 3). Elle amène la puissance électrique nécessaire ainsi que la commande du ventilateur, qui peut être sommaire (allumé ou éteint), ou plus élaborée.

La carte électronique machine 400 est aussi reliée par une communication électronique via un câble 415 à la machine de construction ou maintenance sur laquelle le bloc moteur électrique 100 est mis en place. Le câble 415 est attaché à la machine et est spécifiquement modifié pour chaque famille de machines de construction ou maintenance.

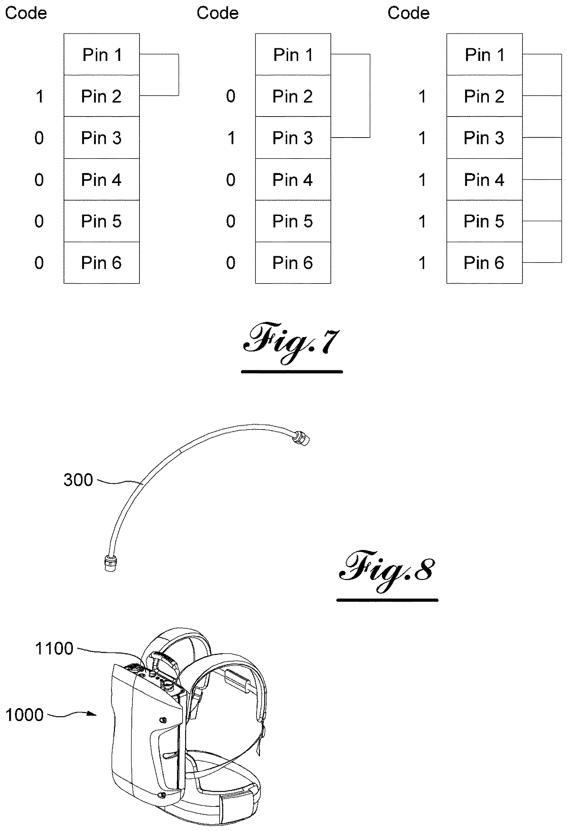

[fig.7] En effet, la carte électronique machine 400 est programmée de manière à faire fonctionner le moteur de manière différente en fonction de la machine de construction ou maintenance sur laquelle est installé le bloc moteur 100. Certaines machines de construction ou maintenance ont besoin d'un moteur tournant en continu, d'autre d'un moteur effectuant des cycles de démarrages et arrêts. De plus il est prévu de raccorder des accessoires électriques et leur nombre et leur type peut différer d'une machine de maintenance ou construction à l'autre.

Comme représenté en figure 7, pour la reconnaissance de la machine de construction ou maintenance, parmi une famille prédéfinie de machines de construction ou maintenance, 6 broches du connecteur 18 points sont utilisées. Plus précisément, et même si d'autres méthodes sont envisageables, il a été trouvé avantageux que le câble 415 comporte des ponts spécifique à chaque famille entre la broche 1 et une ou plusieurs des broches 2 à 5 afin de créer un code binaire sur 5 bits unique à chaque type de machines.

Le code 00000 étant réservé pour un mode sécurité utilisé si le faisceau machine est endommagé, il est possible de coder jusqu'à 31 types de machines différents. Le logiciel de la carte électronique installée dans le deuxième compartiment 120 lit et interprète le code et adapte la commande du moteur et son fonctionnement selon le type de machine identifié. Il adapte aussi l'affichage de la durée de fonctionnement restante au vu de l'état de la batterie, ou autonomie, sur l'interface homme-machine 190, en sorte de prendre en compte le type de la machine parmi les types prédéfinis, qui sont par exemple au nombre de 31.

La figure 7 montre trois codages différents : un pont entre le pin 0 et le pin 1 pour le premier codage, un pont entre le pin 0 et le pin 2 pour le deuxième codage et des ponts entre les six pins pour le troisième codage. Trois familles de machine de construction ou maintenance sont ainsi définies. La présence des ponts est détectée par l'électronique embarquée du bloc moteur 100, qui adapte la puissance mécanique qu'il fournit en fonction du code qui est lu.

Par ailleurs, le bloc moteur 100 est équipé d'une sortie de puissance électrique pour alimenter la partie électrique des machines de construction ou maintenance possédant un accessoire ou équipement électrique ou de l'électronique embarquée.

Ainsi une sortie électrique de tension 48V est présente sur le bloc moteur pour alimenter le ou les coffrets électriques de la machine de construction ou maintenance, et un convertisseur courant continu courant continu est ajouté dans bloc moteur ou la machine de construction ou maintenance en cas de besoin.

Il est possible de brancher un ou plusieurs phares, notamment, compte tenu de leur consommation, des phares à LED, compatibles 48V.

Il est notamment possible de paramétrer le bloc moteur en fonction de la machine de construction ou maintenance à laquelle il est couplé.

Il est aussi possible de relier à l'électronique de contrôle du moteur 210 (visible en figure 3) une poignée de commande déportée ou un bouton de mise en route pour l'opérateur. On peut aussi relier un horamètre.

[fig.8] Entièrement électrique, le bloc moteur 100 présenté aux figures précédentes utilise l'énergie de batteries au lithium pour fonctionner. Les batteries 1100 sont par exemple portées par un opérateur circulant à pied, dans un sac à dos 1000, et reliées par un câble 300 au bloc moteur électrique, au niveau de son connecteur C présenté aux figures 2, 4 et 9.

[fig.9] Le branchement du bloc moteur à la batterie de puissance apportant l'alimentation électrique se fait à l'aide d'une carte machine. Le câble 300 est branché sur la face de la carte machine 400 regardant à l'opposé du deuxième compartiment 120. Cette face porte le connecteur C.

[fig.10] Le connecteur électrique à 18 points 430 est intégré sur la face de la carte machine 400 accessible dans le deuxième compartiment 120 afin de faire le lien entre la carte machine 400 et la machine de construction ou maintenance et les accessoires qu'elle porte, qui peuvent notamment être des phares, comme déjà mentionné.

Le contrôleur 420 du moteur est alimenté en 48V à partir de la carte machine. Celle-ci comprend de plus les borniers de connexion pour les entrées et sorties d'interface utilisateur, et les entrées et sorties logique de communication avec l'éventuel contrôleur électronique de la machine de construction ou maintenance à laquelle le bloc moteur est couplé.

Cette carte dispose d'un programme qui gère le fonctionnement spécifique de chaque type de machine de construction ou maintenance parmi une série de type de machine répertorié.

La logique de fonctionnement comprend des étapes par lesquelles le câble de la batterie est branché sur la carte machine, une tension permanente 0 / 5V fournie par la batterie permet alors la mise en route de la carte machine, un dialogue électronique crypté s'engage en conséquence entre la carte machine 400 et le système de gestion de la batterie à travers le câble 300.

Si la carte machine 400 est reconnue par le système de gestion de la batterie, celui-ci autorise la fermeture de la voie de décharge 48V, puis la carte 400 pré-charge le contrôleur moteur, et enfin le bloc moteur 100 et la machine de construction ou maintenance couplée sont prêts à être utilisés.

[fig.11] En figure 11 on a représenté le fonctionnement du système avec une visseuse de rails 2000. L'opérateur porte un sac à dos 1000 dans lequel est présent une batterie 1100, reliée au bloc moteur 100 par le câble 300. La connexion du câble est protégée grâce à la forme du bloc moteur et à son positionnement au sein de celui-ci.

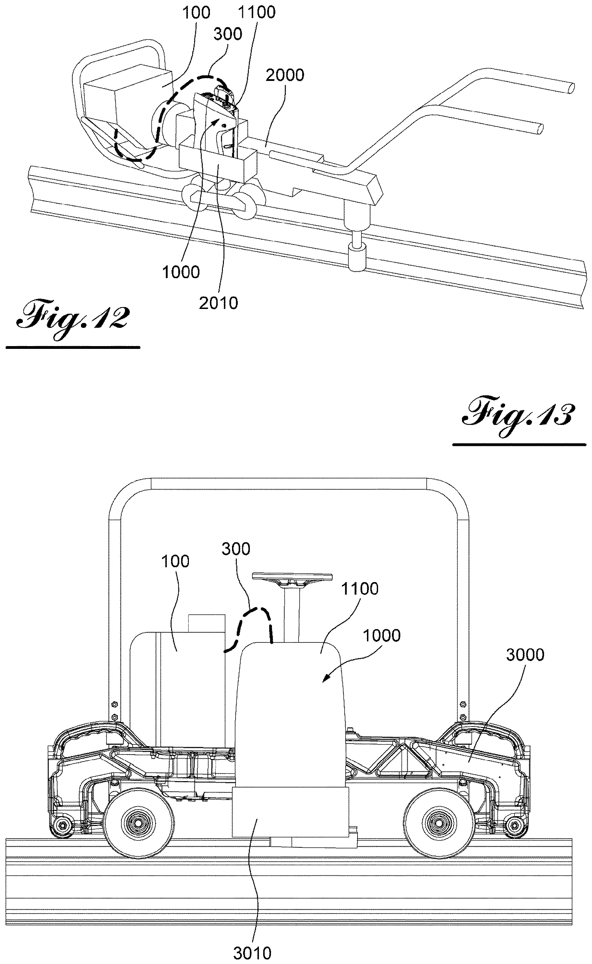

[fig.12] En figure 12, on a représenté le fonctionnement des mêmes éléments, avec la batterie et son sac installés dans un bac 2010 porté par la visseuse 2000.

[fig.13] En figure 13, la machine de construction et maintenance est cette fois-ci une meuleuse de rails 3000, sur laquelle est également installé un bac 3010 pour accueillir la batterie 1100 et le sac 1000. A nouveau, le câble 300 est relié au bloc moteur 100 et sa connexion est protégé par les formes de celui-ci.

Le bloc moteur peut être incliné de nombreuses manières, ce qui lui confère un avantage important vis-à-vis des bloc moteur thermique antérieurs.

Il offre de plus des gammes de couple avantageuses, et sa commande est particulièrement maniable et fine, notamment grâce à la réactivité du système.

Le bloc moteur s'adapte à des machines de construction et maintenance de plus de plus de 25 kg, notamment, et qui ne peuvent pas être portées par un opérateur. Elles avancent donc sur le terrain à l'aide de roues ou d'un chariot, typiquement, sans que cela soit exclusif, en progressant sur les rails de chemin de fer.

L'affichage sur l'interface homme-machine 190 comprend l'état de colmatage éventuel du filtre à air 230 (voir figure 3).

## Revendications

1. Système de motorisation (100) pour machine de construction ou maintenance technique (2000, 3000), **caractérisé en ce qu'**il comprend dans un bloc compact une paroi (101) admettant sensiblement un plan de symétrie transversal (P), la paroi (101) séparant un premier compartiment (110) dans lequel est logé un moteur (210) du système de motorisation et un deuxième compartiment (120) abritant des éléments (400, 420) électroniques de contrôle du moteur embarqués dans le système de motorisation, le système de motorisation (100) comprenant de plus un arbre de sortie (150, X1) du système parallèle à la paroi (101) et au plan de symétrie transversal (P), l'arbre de sortie (150, X1) du système dépassant perpendiculairement d'un flasque (149) du bloc compact pour couplage mécanique à une machine de construction ou maintenance, système de motorisation (100) dans lequel le moteur (210) est électrique et le système de motorisation (100) comprend de plus un connecteur (C) pour alimentation électrique de puissance, par une source électrique externe (1100), dudit moteur électrique (210) et desdits éléments électroniques de contrôle (400, 420), le connecteur (C) étant abrité par la paroi (101), du même côté de ladite paroi que le premier compartiment (110), ledit premier compartiment (110) étant décentré par rapport audit plan de symétrie (P), un système de réduction par poulies (500) dans un plan perpendiculaire à l'arbre de sortie (150, X1) du système couplant ledit arbre de sortie (150, X1) du système avec un arbre primaire (215, X2) du moteur parallèle à l'arbre de sortie et plus excentré que l'arbre de sortie (150, X1) du système par rapport au plan de symétrie (P).

2. Système de motorisation (100) pour machine de construction ou maintenance technique selon la revendication 1, **caractérisé en ce que** le système de réduction (500) est un système de réduction par courroie (501).

3. Système de motorisation (100) pour machine de construction ou maintenance technique selon la revendication 1 ou la revendication 2, **caractérisé en ce que** le bloc compact comprend des pieds définissant une surface de pose plane parallèle à la paroi, le flasque (149) de fixation étant perpendiculaire à la paroi.

4. Système de motorisation (100) pour machine de construction ou maintenance technique selon l'une des revendications 1 à 3, **caractérisé en ce que** le bloc comprend un coffre en plastique thermoformé pour le premier compartiment, la paroi (101) s'étendant au-dessus dudit coffre qu'elle ferme et au-dessus d'un espace externe abrité par la paroi, le système de motorisation comprenant au sein dudit espace un agencement de soutien pour fixer et protéger un câble d'alimentation électrique externe (300) à accoupler audit connecteur (C).

5. Système de motorisation (100) pour machine de construction ou maintenance technique selon l'une des revendications 1 à 4, **caractérisé en ce que** le système comprend un filtre à particules (230) dans une circulation d'air en provenance de l'extérieur du système de motorisation pour refroidir le moteur, ledit filtre à particules étant protégé des intempéries par un déflecteur (170).

6. Système de motorisation (100) pour machine de construction ou maintenance technique selon l'une des revendications 1 à 5, **caractérisé en ce que** le système comprend un ventilateur électrique (220) agencé dans une circulation d'air en provenance de l'extérieur du système de motorisation pour refroidir le moteur.

7. Système de motorisation (100) pour machine de construction ou maintenance technique selon l'une des revendications 1 à 6, **caractérisé en ce que** le système de réduction comprend une courroie de réduction couplant deux poulies (151, 217), ladite courroie et les deux poulies étant carénées par un châssis (130) proposant une accessibilité (503) pour le verrouillage du réglage en tension de ladite courroie.

8. Système de motorisation (100) pour machine de construction ou maintenance technique selon l'une des revendications 1 à 7, **caractérisé en ce que** le système comprend un système d'équilibrage de pression pour éviter la formation de condensation à l'intérieur du deuxième compartiment (120).

9. Système de motorisation (100) pour machine de construction ou maintenance technique selon l'une des revendications 1 à 8, **caractérisé en ce que** le système comprend un connecteur (430) pour relier (415) les éléments (400, 420) électroniques de contrôle du moteur à un contrôleur de la machine de construction ou maintenance technique, les éléments électroniques de contrôle étant configurés pour prendre en compte automatiquement un type de la machine de construction ou maintenance électrique parmi une famille de types de machine de construction ou maintenance électrique, en sorte d'adapter le fonctionnement du moteur (210).

10. Procédé de contrôle d'une machine de construction ou maintenance technique, comprenant un couplage mécanique de la machine de construction ou maintenance technique (2000, 3000) avec un arbre de sortie (150) d'un système (100) de motorisation électrique selon l'une des revendications 1 à 9, une reconnaissance par un code électrique d'un type de la machine parmi une famille de machines de construction ou maintenance technique, et un pilotage de l'arbre de sortie du système de motorisation électrique en fonction du type reconnu.

## Patentansprüche

1. Motorisierungssystem (100) für Baumaschine oder technische Wartungsmaschine (2000, 3000), **dadurch gekennzeichnet, dass** sie in einem kompakten Block eine Wand (101) umfasst, die im Wesentlichen eine quer liegende Symmetrieebene (P) aufnimmt, wobei die Wand (101) ein erstes Abteil (110) trennt, in dem ein Motor (210) des Motorisierungssystems untergebracht ist, und ein zweites Abteil (120), das elektronische Elemente (400, 420) zu Steuerung des Motors beherbergt, die sich im Motorisierungssystem befinden, wobei das Motorisierungssystem (100) eine Antriebswelle (150, X1) des Systems parallel zur Wand (101) und zur quer liegenden Symmetrieebene (P) umfasst, wobei die Antriebswelle (150, X1) des Systems senkrecht einen Flansch (149) des kompakten Blocks zur mechanischen Kopplung mit einer Bau- oder Wartungsmaschine übersteigt, Motorisierungssystem (100), in dem der Motor (210) elektrisch ist, und das Motorisierungssystem (100) mehr als einen Verbinder (C) umfasst, zur elektrischen Versorgung mit Leistung durch eine externe elektrische Quelle (1100) des elektrischen Motors (210) und der elektronischen Steuerelemente (400, 420), wobei der Verbinder (C), beherbergt von der Wand (101), der gleichen Seite der Wand wie das erste Abteil (110) ist, wobei das erste Abteil (110) mit Bezug auf die Symmetrieebene (P) dezentriert ist, wobei ein Rollenreduktionssystem (500) auf einer Ebene senkrecht zur Antriebswelle (150, X1) des Systems die Antriebswelle (150, X1) des Systems mit einer Primärwelle (215, X2) des Motors, parallel zur Antriebswelle und exzentrischer als die Antriebswelle (150, X1) des Systems mit Bezug auf die Symmetrieebene (P) koppelt.

2. Motorisierungssystem (100) für Baumaschine oder technische Wartungsmaschine nach Anspruch 1, **dadurch gekennzeichnet, dass** das System zur Reduktion (500) ein System zur Reduktion durch Riemen (501) ist.

3. Motorisierungssystem (100) für Baumaschine oder technische Wartungsmaschine nach Anspruch 1 oder Anspruch 2, **dadurch gekennzeichnet, dass** der kompakte Block Stützfüße umfasst, die eine ebene Auflagefläche parallel zur Wand bilden, wobei der Befestigungsflansch (149) senkrecht zur Wand ist.

4. Motorisierungssystem (100) für Baumaschine oder technische Wartungsmaschine nach einem der Ansprüche 1 bis 3, **dadurch gekennzeichnet, dass** der Block einen Kasten aus thermogeformtem Kunststoff für das erste Abteil umfasst, wobei sich die Wand (101) über den Kasten hinaus erstreckt, den sie über einem äußeren Raum, der von der Wand beherbergt wird, schließt, wobei das Motorisierungssystem innerhalb des Raums eine Stützanordnung umfasst, um ein äußeres elektrisches Versorgungskabel (300) zu befestigen und zu schützen, das mit dem Verbinder (C) gekoppelt werden soll.

5. Motorisierungssystem (100) für Baumaschine oder technische Wartungsmaschine nach einem der Ansprüche 1 bis 4, **dadurch gekennzeichnet, dass** das System einen Partikelfilter (230) in einer Luftzirkulation umfasst, die von der Außenseite des Motorisierungssystems stammt, um den Motor abzukühlen, wobei der Partikelfilter durch einen Deflektor vor den Wetterunbilden (170) geschützt ist.

6. Motorisierungssystem (100) für Baumaschine oder technische Wartungsmaschine nach einem der Ansprüche 1 bis 5, **dadurch gekennzeichnet, dass** das System einen elektrischen Ventilator (220) umfasst, der in einer Luftzirkulation angeordnet ist, die von der Außenseite des Motorisierungssystems stammt, um den Motor abzukühlen.

7. Motorisierungssystem (100) für Baumaschine oder technische Wartungsmaschine nach einem der Ansprüche 1 bis 6, **dadurch gekennzeichnet, dass** das System zur Reduktion einen Reduktionsriemen umfasst, der zwei Rollen (151, 217) koppelt, wobei der Riemen und die zwei Rollen durch ein Gehäuse (130) verkleidet sind, das einen Zugang (503) für die Verriegelung der Einstellung der Spannung des Riemens bietet.

8. Motorisierungssystem (100) für Baumaschine oder technische Wartungsmaschine nach einem der Ansprüche 1 bis 7, **dadurch gekennzeichnet, dass** das System ein System zum Druckausgleich umfasst, um die Bildung von Kondensation im Inneren des zweiten Abteils (120) zu verhindern.

9. Motorisierungssystem (100) für Baumaschine oder technische Wartungsmaschine nach einem der Ansprüche 1 bis 8, **dadurch gekennzeichnet, dass** das System einen Verbinder (430) umfasst, um die elektronischen Elemente (400, 420) zur Steuerung des Motors mit einer Steuerung der Baumaschine oder technischen Wartungsmaschine zu verbinden (415), wobei die elektronischen Elemente zur Steuerung konfiguriert sind, um automatisch eine Art von Baumaschine oder elektrischer Wartungsmaschine aus einer Familie von Arten von Baumaschinen oder elektrischen Wartungsmaschinen in Betracht zu ziehen, um die Funktion des Motors (210) anzupassen.

10. Verfahren zur Steuerung einer Baumaschine oder technischen Wartungsmaschine, umfassend eine mechanische Kopplung der Baumaschine oder technischen Wartungsmaschine (2000, 3000) mit einer Antriebswelle (150) eines elektrischen Motorisierungssystems (100) nach einem der Ansprüche 1 bis 9, eine Erkennung durch einen elektrischen Code einer Art der Maschine aus einer Familie von Baumaschinen oder technischen Wartungsmaschinen, und eine Steuerung der Antriebswelle des elektrischen Motorisierungssystems je nach dem erkannten Typ.

## Claims

1. A drive system (100) for a construction or technical maintenance machine (2000, 3000), **characterized in that** it comprises, in a compact block, a wall (101) substantially admitting a transverse plane of symmetry (P), the wall (101) separating a first compartment (110) in which a motor (210) of the drive system is housed and a second compartment (120) housing electronic control elements (400, 420) of the motor integrated into the drive system, the drive system (100) also comprising an output shaft (150, X1) of the system parallel to the wall (101) and to the transverse plane of symmetry (P), the output shaft (150, X1) of the system perpendicularly exceeding a flange (149) of the compact block for mechanical coupling to a construction or maintenance machine, in which drive system (100) the motor (210) is electric and the drive system (100) also comprises a connector (C) for an electric power supply, by an outside electric source (1100), of said electric motor (210) and of said electronic control elements (400, 420), the connector (C) being housed by the wall (101), on the same side of said wall as the first compartment (110), said first compartment (110) being off-centered relative to said plane of symmetry (P), a reduction system by pulleys (500) in a plane perpendicular to the output shaft (150, X1) of the system coupling said output shaft (150, X1) of the system with a primary shaft (215, X2) of the motor that is parallel to the output shaft and more off-centered than the output shaft (150, X1) of the system relative to the plane of symmetry (P).

2. The drive system (100) for a construction or technical maintenance machine according to claim 1, **characterized in that** the reduction system (500) is a belt reduction system (501).

3. The drive system (100) for a construction or technical maintenance machine according to claim 1 or claim 2, **characterized in that** the compact block comprises feet defining a planar placement surface parallel to the wall, the attachment flange (149) being perpendicular to the wall.

4. The drive system (100) for a construction or technical maintenance machine according to one of claims 1 to 3, **characterized in that** the block comprises a box made of thermoformed plastic for the first compartment, the wall (101) extending above said box, which it closes, and above an outer space housed by the wall, the drive means comprising, within said space, a support arrangement to attach and protect an outside power supply cable (300) to be coupled to said connector (C).

5. The drive system (100) for a construction and technical maintenance machine according to one of claims 1 to 4, **characterized in that** the system comprises a particle filter (230) in circulating air coming from outside the drive system to cool the motor, said particle filter being protected from bad weather by a deflector (170).

6. The drive system (100) for a construction or technical maintenance machine according to one of claims 1 to 5, **characterized in that** the system comprises an electric fan (220) arranged in circulating air coming from outside the drive system to cool the motor.

7. The drive system (100) for a construction or technical machine according to one of claims 1 to 6, **characterized in that** the reduction system comprises a reduction belt coupling two pulleys (151, 217), said belt and the two pulleys being faired by a frame (130) offering accessibility (503) to lock the tension adjustment of said belt.

8. The drive system (100) for a construction or technical maintenance machine according to one of claims 1 to 7, **characterized in that** the system comprises a pressure equilibration system to prevent condensation from forming inside the second compartment (120).

9. The drive system (100) for a construction or technical maintenance machine according to one of claims 1 to 8, **characterized in that** the system comprises a connector (430) to connect (415) the electronic control elements (400, 420) of the motor to a controller of the construction or technical maintenance machine, the electronic control elements being configured to automatically take into account a type of the construction or technical maintenance machine among a family of types of construction or technical maintenance machine, so as to adapt the operation of the motor (210).

10. A control method of a construction or technical maintenance machine, comprising mechanical coupling of the construction or technical maintenance machine (2000, 3000) with an output shaft (150) of an electric drive system (100) according to one of claims 1 to 9, recognition by an electric code of a type of the machine among a family of construction or technical maintenance machines, and control of the output shaft of the electric drive system based on the recognized type.
